# EUROPÄISCHE PATENTSCHRIFT

(11) **EP 2 458 270 B1**
(45) Veröffentlichungstag und Bekanntmachung des Hinweises auf die Patenterteilung: **27.05.2015**
(21) Anmeldenummer: 11009273.1
(22) Anmeldetag: 23.11.2011
(51) Int. Cl.: F21V 17/16, F21S 8/02

(54) **Elektrische Leuchte**
Electric luminaire
Lampe électrique

(30) Priorität: 25.11.2010 DE 202010015872 U
(43) Veröffentlichungstag der Anmeldung: 30.05.2012
(73) Patentinhaber: ELPRO Lichttechnik GmbH, 59823 Arnsberg (DE)
(72) Erfinder: Wiegelmann, Kai Kristjan, 44141 Dortmund (DE)
(74) Vertreter: Köchling, Conrad-Joachim

(56) Entgegenhaltungen:
- WO-A1-03/098101
- FR-A1- 2 562 638
- US-A- 4 475 147
- US-A- 4 510 559

## Beschreibung

Die Erfindung betrifft eine elektrische Leuchte gemäß Oberbegriff des Anspruches 1.

Solche Leuchten sind im Stand der Technik bekannt.

Der Zusammenbau einer solchen Leuchte ist relativ aufwendig, da in dem Leuchtengehäuseteil beispielsweise ein Reflektor montiert und befestigt werden muss. Des Weiteren muss gegebenenfalls ein weiteres Zusatzteil, beispielsweise eine Glasschutzscheibe montiert werden. Schliesslich muss der entsprechende Vorsatzring positioniert und montiert werden, damit die Einzelteile zu einer stabilen dauerhaften Einheit zusammengefügt sind. Der Zusammenbau erfolgt regelmäßig mit Hilfe von Werkzeugen und ist demzufolge aufwendig.

Im Stand der Technik ist es beispielsweise üblich, den Vorsatzring nach Art eines Bajonettverschlusses an dem Gehäuseteil zu fixieren, wobei hier aber nur eine Verklemmung der Anlaufschrägen erfolgt, was zur Folge hat, dass durch mechanische Erschütterungen ein Lösen des Ringes möglich ist.

Aus der US 4 475 147 A ist eine elektrische Leuchte bekannt mit einem Vorsatzring, der einen axial abragenden, umlaufenden oder aus Abschnitten gebildeten Kragen aufweist, einem Leuchtengehäuseteil, das mit einem zylindrischen Endteil auf dem Kragen des Vorsatzringes positioniert ist, sowie mindestens einem Zusatzteil, das mit einem Bestandteil an dem Kragen des Vorsatzringes positioniert ist, umfassend mindestens ein Federelement, welches auf den Kragen des Vorsatzringes aufgesteckt ist und an diesem verkrallt ist, das Federelement hat erste federnde Bestandteile, die in Montagesolllage radial nach außen vom Kragen abragen und mit Haltekonturen am Innenmantel des zylindrischen Endteils des Leuchtengehäuseteils in Eingriff sind, das Federelement hat zweite federnde Bestandteile, die in Montagesolllage radial nach innen vom Kragen abragen.

Ausgehend von diesem Stand der Technik liegt der Erfindung die Aufgabe zugrunde, eine elektrische Leuchte gattungsgemäßer Art zu schaffen, die werkzeuglos und mit geringen Kosten zu einer gebrauchsfähigen Einheit aus den Einzelteilen zusammenzubauen ist.

Die Lösung dieser Aufgabe ist im Anspruch 1 angegeben.

Demzufolge ist mindestens ein Federelement, vorzugsweise mehrere Federelemente vorgesehen. Diese Federelemente werden beim Zusammenbau der elektrischen Leuchte werkzeuglos auf den Kragen des Vorsatzringes aufgesteckt und an diesem verkrallt. Dieses Federelement beziehungsweise diese Federelemente dienen dazu einerseits den Vorsatzring am zylindrischen Endteil des Leuchtengehäuses zu fixieren und andererseits Zusatzteile lagerichtig und sicher zu fixieren. Der Zusammenbau kann werkzeuglos erfolgen, so dass eine Montage auch für Ungeübte möglich ist. Auch beispielsweise beim Ersatz des in der Leuchte befindlichen Leuchtmittels ist die Demontage in einfacher Weise möglich, indem lediglich der Vorsatzring unter Überwindung der Kraft der Federelemente von dem zylindrischen Endteil des Leuchtengehäuseteils abgenommen wird. Es sind dann alle Bestandteile zugänglich. Auch die Zusatzteile, die mittels der Federelemente an dem Vorsatzring gehalten werden, können unter Überwindung der Federkraft von dem Vorsatzring abgezogen werden.

Gemäß der erfindungsgemäßen Ausbildung ist ein besonders funktionstüchtiges Federelement zur Verfügung gestellt. Durch die entsprechende Ausbildung sind die unterschiedlichen Haltemechanismen des Federelementes voneinander entkoppelt, so dass also das Federelement einerseits auf dem Kragen des Vorsatzringes positionierbar und an diesem verrastbar ist, ohne dass andere Funktionen hierdurch beeinflusst sind. Sofern das so vormontierte Federelement zur Montage eines Zusatzteiles genutzt wird, so sind hierzu separat betätigbare Rastfinger angeordnet, mittels derer das Zusatzteil oder die Zusatzteile gehalten werden können.

Des Weiteren wird auch trotz nur eines Federelementes eine sichere und von den anderen Haltemechanismen unabhängige Befestigung am zylindrischen Endteil des Leuchtengehäuseteils ermöglichen.

Um eine Montagehilfe zu bilden, ist vorgesehen, dass der Vorsatzring einen radial abragenden Flansch oder mehrere Flanschteile aufweist, an dem oder an denen die freie Randkante des zylindrischen Endteils des Leuchtengehäuseteils in Solllage anliegt.

Der abragende Flansch dient als Positionierhilfe und Einstecktiefenbegrenzung, so dass dem Benutzer die Handhabung erleichtert ist.

Aus dem gleichen Grunde ist vorgesehen, dass der Vorsatzring am Kragen innenliegend eine umlaufende oder durch Teilstücke gebildete radial vorragende Anschlagkante aufweist, an der in Solllage Bestandteile des oder der Zusatzteile anliegen.

Auch hierbei dient die umlaufende oder durch Abschnitte gebildete Anschlagkante als eine Einstecktiefenbegrenzung und eine Positionierungshilfe für den Benutzer.

Bevorzugt ist ferner vorgesehen, dass drei Federelemente vorgesehen sind, die gleichmäßig voneinander beabstandet auf dem Kragen des Vorsatzringes positioniert sind.

Durch die Anordnung von beispielsweise im Winkel von 120 °zueinander versetzt angeordneten Federelementen ist gewährleistet, dass Zusatzteile, wie Reflektoren oder dergleichen zentriert angeordnet sind, so dass eine perfekte lichttechnische Anwendung ermöglicht ist. Auch wird durch diese Anordnung erreicht, dass der Vorsatzring sich nicht gegenüber dem zylindrischen Ende des Gehäuseteils versetzen oder verschränken kann.

Vorzugsweise kann zudem vorgesehen sein, dass das Leuchtengehäuseteil mit seinem zylindrischen Endteil in Montagesolllage bündig an die Außenumfangskontur des Vorsatzringes anschließt, so dass eine stufenlose Außenfläche gebildet ist.

Auch kann bevorzugt vorgesehen sein, dass das Zusatzteil ein Reflektor ist, der an seinem weiten Ende einen radial abragenden Flanschrand bildet oder aufweist, der in Solllage an der Anschlagkante des Vorsatzringes anliegt.

Des Weiteren kann vorgesehen sein, dass bevorzugt zusätzlich zum Reflektor oder alternativ eine Glasschutzscheibe, ein oder mehrere Filterglasscheiben oder ein Wabenraster als Zusatzteil angeordnet ist.

Vorzugsweise ist dabei vorgesehen, dass am Leuchtengehäuseteil Fassungen für Leuchtmittel fixiert sind.

Der besondere Vorteil des erfindungsgemäßen Federelementes ist, dass dieses Federelement werkzeuglos auf den Rand des Vorsatzringes gesteckt und dort dauerhaft positioniert werden kann. Das Federelement hat dabei, wenn es am Vorsatzring montiert ist, zwei weitere Funktionen und bildet in der Anwendung kostensparende Vorteile.

Durch die Ausgestaltung des Federelementes wird der Vorsatzring in einfacher Weise am zylindrischen Endteil des Gehäuseteils gehalten, wobei eine selbstsichernde Anordnung durch Verrastung gewährleistet ist. Durch die radial innenliegende Gestaltung des Federelementes werden weitere Zubehörteile befestigt, wie Glasschutzscheiben, Filtergläser, Raster, Reflektoren und dergleichen, wobei entsprechende Leuchtmittel schon im Reflektor eingebaut sein können.

Dadurch, dass das Federelement mit entsprechenden Widerhaken in den Vertiefungen im Vorsatzring einrasten kann, ist nicht nur ein werkzeugloses Montieren möglich, sondern auch eine Demontage durchführbar, bei der das Federelement am Vorsatzring gehalten wird und lediglich die anderen Teile demontierbar sind, also der Vorsatzring vom Leuchtengehäuseteil abnehmbar ist und der Reflektor oder die sonstigen Zusatzteile vom Vorsatzring lösbar sind, ohne dass die Federelemente vom Vorsatzring abgelöst werden müssten.

Ein Ausführungsbeispiel der Erfindung ist in der Zeichnung dargestellt und im Folgenden näher beschrieben. Es zeigt:
- Figur 1: schematisch eine entsprechende elektrische Leuchte im Montagesollzustand;
- Figur 2: ein erfindungsgemäßes Federelement in Einzeldarstellung in Seitenansicht;
- Figur 3: das Federelement in einer Stirnansicht;
- Figur 4: das Federelement von oben gesehen;
- Figur 5: das Federelement in isometrischer Darstellung von der Breitseite her gesehen;
- Figur 6: desgleichen von der Außenseite Her gesehen.

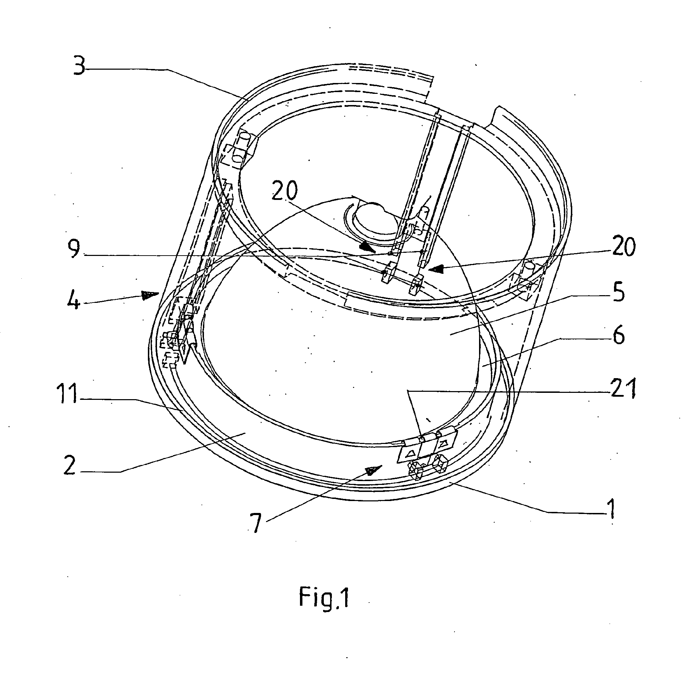

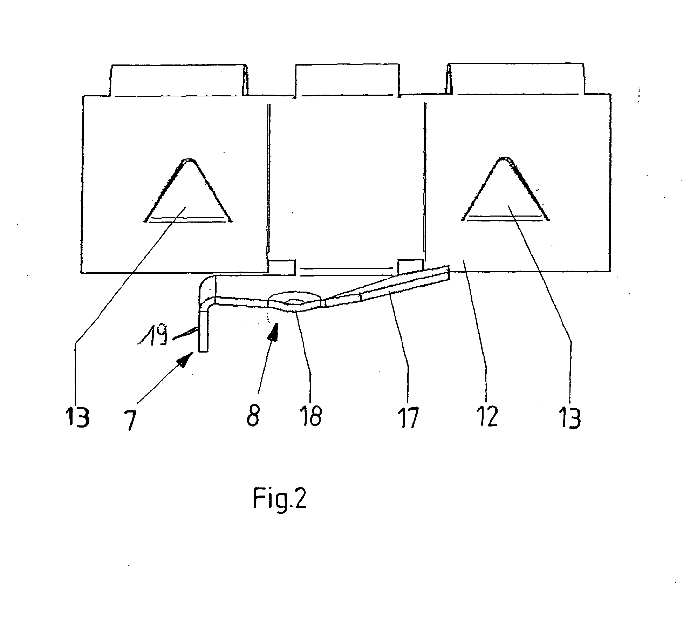

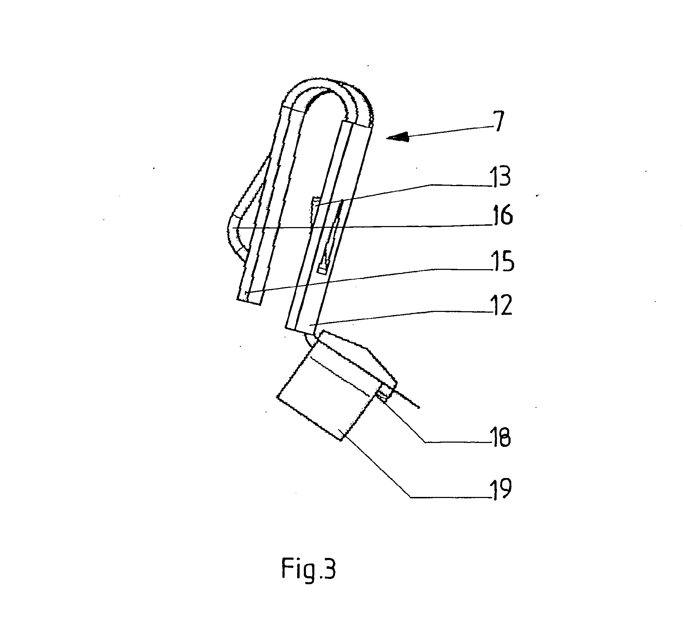

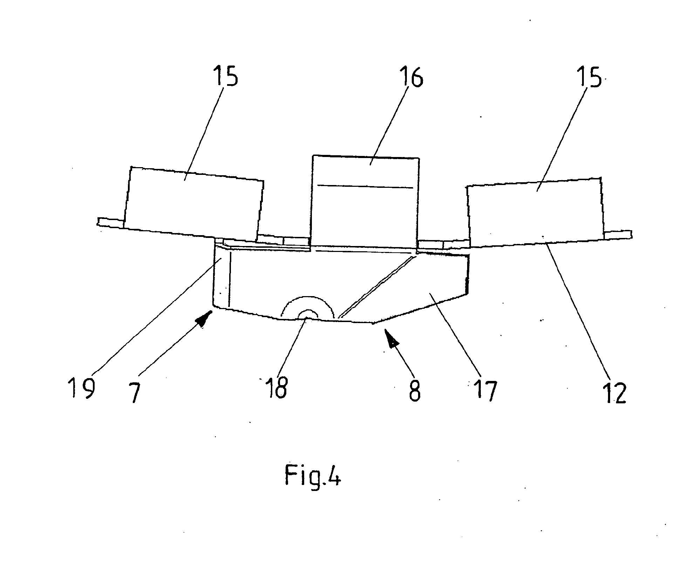

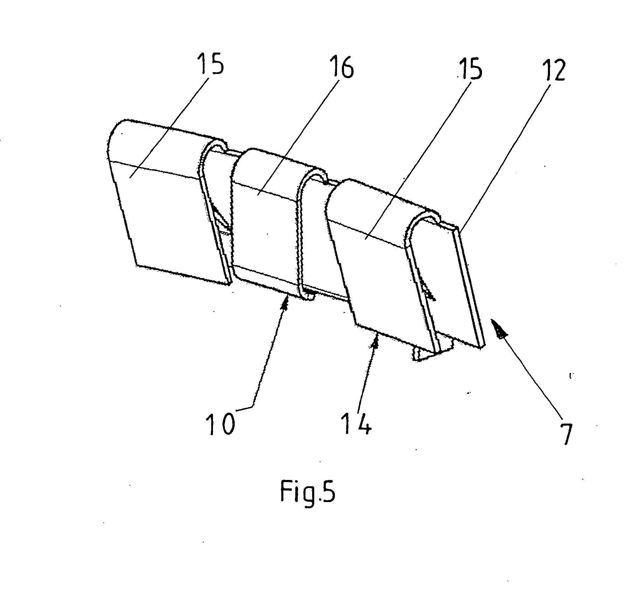

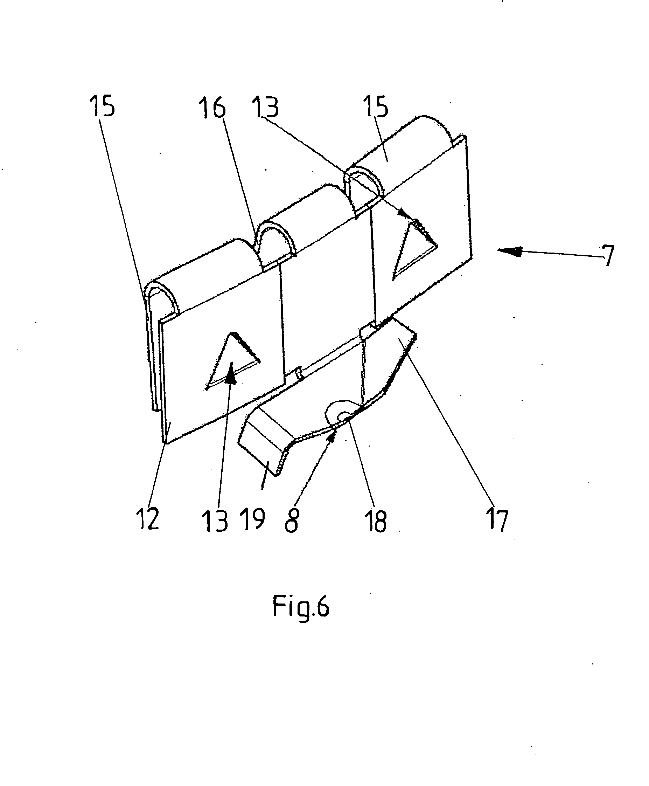

In Figur 1 ist eine entsprechende elektrische Leuchte gezeigt. Diese weist einen Vorsatzring 1 auf, der einen axial abragenden umlaufenden Kragen 2 hat. Ferner ist ein Leuchtengehäuseteil 3 vorgesehen, dass mit einem zylindrischen Endteil 4 auf dem Kragen 2 des Vorsatzringes 1 positioniert ist. Ferner ist mindestens ein Zusatzteil 5 vorgesehen, dass mit einem Bestandteil 6 an dem Kragen 2 des Vorsatzteiles 1 positioniert ist. Zur Befestigung der Teile aneinander sind Federelemente 7 vorgesehen, die in den Figuren 2 bis 6 als Einzelelement in unterschiedlicher Sicht dargestellt sind.

Jedes Federelement 7 ist auf den Kragen 2 des Vorsatzringes 1 in der Lage gemäß Figur 1 von oben aufgesteckt und an diesen verkrallt. Des Weiteren weist jedes Federelement 7 erste federnde und/oder rastende Bestandteile 8 auf, die in Montagesolllage radial nach außen von dem Kragen 2 abragen und mit Haltekonturen 9 am Innenmantel des zylindrischen Endteiles 4 des Leuchtengehäuseteils 3 in Eingriff sind. Ferner weist jedes Federelement 7 zweite federnde und/oder rastende Bestandteile 10 auf, die in Montagesolllage nach radial innen vom Kragen 2 abragen und mit Teilen oder Bereichen (6) mindestens eines Zusatzteiles 5 in Eingriff sind.

Der Vorsatzring 1 weist einen radial abragenden Flansch 11 auf, an dem die Randkante des zylindrischen Endteiles 4 des Leuchtengehäuseteiles 3 in Solllage anliegt. Des Weiteren weist der Vorsatzring 1 am Kragen 2 innenliegend eine umlaufende Anschlagkante auf, an der in Solllage die Bestandteile 6 eines Zusatzteiles 5 anliegen oder sich abstützen.

Wie insbesondere aus den Figuren 2 bis 6 ersichtlich, weist das Federelement 7 ein etwa U-förmiges Teil auf, welches auf den Kragen 2 des Vorsatzringes 1 aufsteckbar ist. Ein erster Schenkel 12 des U-förmigen Teils liegt in Montagesolllage am radial äußeren Mantel des Kragens 2 an. Es weist zwei federnde Rastnasen 13 auf, die sich am Mantel des Kragens 2 abstützen. Der Mantel weist dazu bevorzugt Ausnehmungen oder Vertiefungen auf, in welche die Rastnasen 13 in Solllage eingreifen, so dass ein sicherer und dauerhafter Sitz erreicht ist.

Ein zweiter Schenkel 14 des U-förmigen Teils ist in mehrere Rastfinger 15,16 aufgegliedert, von denen erste Rastfinger 15 auf der den federnden Rastnasen 13 gegenüberliegenden inneren Mantelfläche des Kragens 2 anliegen und von denen ein zweiter Rastfinger 16 in einen Ausschnitt 21 des Kragens 2 federnd eingreift. Dieser zweite Rastfinger 16 weist eine nach radial innen vorspringende Kontur auf, die den zweiten federnden und/oder rastenden Bestandteil 10 zum Halt eines Zusatzteiles 5 bildet.

An der freien Randkante des ersten Schenkels 12 des U-förmigen Teils ist ein sich in Umfangsrichtung des Kragens 2 erstreckendes Federteil angeformt, welches das erste federnde und/oder rastende Federelement 8 bildet. Dieses weist eine Einführfläche oder Einführschräge 17, eine Rastnase 18 und einen Endanschlag 19 auf. Die zusammenwirkenden Elemente des Gehäuseteiles 3 sind durch am Innenmantel des zylindrischen Endteiles 4 des Gehäuseteiles 3 ausgebildete Stegpaare 9 realisiert, die im Umfangsrichtung Ausnehmungen 20 aufweisen. In diese Ausnehmungen 20 ist das Federteil mit der Einführfläche 17 voraus bis zum Anschlag des Endanschlages 19 an einem der Stege 9 einschiebbar. In dieser Solllage stützt sich die Rastnase 18 an dem einen Steg 9 ab, und zwar auf der dem Endanschlag 19 abgewandten Stegseite.

Die dem Ende des zylindrischen Endteiles 4 des Gehäuseteils 3 abgewandten, durch die Ausnehmung 20 unterbrochenen Teile der Stegpaare 9 stützen sich an dem ersten Schenkel 12 des U-förmigen Teiles ab oder sind zumindest mit geringem radialen Abstand von diesem in Solllage angeordnet.

Wie in Figur 1 verdeutlicht, sollen vorzugsweise drei Federelemente 7 vorgesehen sein, die gleichmäßig auf den Umfang verteilt sind. Hierdurch wird eine zentrische Anordnung der Teile zueinander gefördert und erreicht.

Im Ausführungsbeispiel ist das Zusatzteil 5 durch einen Reflektor gebildet, der an seinem weiten Ende einen radial abragenden Flanschrand 6 aufweist, welcher in Solllage an der innen umlaufenden Anschlagkante des Vorsatzringes 1 beziehungsweise des Kragens 2 anliegt.

Die Erfindung ist nicht auf das Ausführungsbeispiel beschränkt, sondern im Rahmen der Offenbarung vielfach variabel.

## Patentansprüche

1. Elektrische Leuchte mit einem Vorsatzring (1), der einen axial abragenden, umlaufenden oder aus Abschnitten gebildeten Kragen (2) aufweist, einem Leuchtengehäuseteil (3), das mit einem zylindrischen Endteil (4) auf dem Kragen (2) des Vorsatzringes (1) positioniert ist, sowie mindestens einem Zusatzteil (5), das mit einem Bestandteil (6) an dem Kragen (2) des Vorsatzringes (1) positioniert ist, umfassend mindestens ein Federelement (7), welches auf den Kragen (2) des Vorsatzringes (1) aufgesteckt ist und an diesem verkrallt ist, wobei das Federelement (7) erste federnde und/oder rastende Bestandteile (8) hat, die in Montagesolllage radial nach außen vom Kragen (2) abragen und mit Haltekonturen (9) am Innenmantel des zylindrischen Endteils (4) des Leuchtengehäuseteils (3) in Eingriff sind, und das Federelement (7) zweite federnde und/oder rastende Bestandteile (10) hat, die in Montagesolllage radial nach innen vom Kragen (2) abragen, **dadurch gekennzeichnet, dass** die zweiten federnden und/oder rastende Bestandteile des Federelementes und mit Teilen oder Bereichen mindestens eines Zusatzteils (5) in Eingriff sind, dass das Federelement (7) ein etwa U-förmiges Teil aufweist, das auf den Kragen (2) des Vorsatzringes (1) aufsteckbar ist, wobei ein erster Schenkel (12) des U-förmigen Teils am radial äußeren Mantel des Kragens (2) anliegt und mindestens eine federnde Rastnase (13) aufweist, die sich am Mantel des Kragens (2) abstützt oder bevorzugt in eine Ausnehmung oder Vertiefung des Mantels sperrend eingreift, wobei ein zweiter Schenkel (14) des U-förmigen Teils in mehrere Rastfinger (15,16) aufgegliedert ist, von denen erste Rastfinger (15) auf der den federnden Rastnasen (13) gegenüberliegenden inneren Mantelfläche des Kragens (2) anliegen und von denen ein zweiter Rastfinger (16) in einen Ausschnitt (21) des Kragens (2) federnd eingreift, wobei der zweite Rastfinger (16) die zweiten federnden und/oder rastenden Bestandteile (10) zum Halt eines Zusatzteiles (5) bildet und dass an der freien Randkante des ersten Schenkels (12) des U-förmigen Teils ein sich in Umfangsrichtung des Kragens (2) erstreckendes Federteil angeformt ist, das das erste federnde und/oder rastende Federelement (8) bildet, wozu das Federteil eine Einführfläche (17), eine Rastnase (18) und einen Endanschlag (19) bildet oder aufweist, und am Innenmantel des zylindrischen Endteils des Gehäuseteils (3) axial gerichtete Stegpaare (9) ausgebildet sind, die in Umfangsrichtung Ausnehmungen (20) aufweisen, in die das Federteil mit der Einführfläche (17) bis zum Anschlag des Endanschlages (19) an einen der Stege (9) einschiebbar ist, wobei in der Solllage die Rastnase (18) sich an dem einen Steg (9) abstützt und zwar auf der dem Endanschlag (19) abgewandten Stegseite, wobei schließlich die dem Ende des zylindrischen Endteils (4) des Leuchtengehäuseteils (3) abgewandten, durch die Ausnehmung (20) unterbrochenen Teile der Stegpaare (9) sich an dem ersten Schenkel (12) des U-förmigen Teils abstützen oder zumindest mit geringem radialen Abstand von diesem angeordnet sind.

2. Leuchte nach Anspruch 1, **dadurch gekennzeichnet, dass** der Vorsatzring (1) einen radial abragenden Flansch (11) oder mehrere Flanschteile aufweist, an dem oder an denen die freie Randkante des zylindrischen Endteils (4) des Leuchtengehäuseteils (3) in Solllage anliegt.

3. Leuchte nach Anspruch 1 oder 2, **dadurch gekennzeichnet, dass** der Vorsatzring (1) am Kragen (2) innenliegend eine umlaufende oder durch Teilstücke gebildete radial vorragende Anschlagkante aufweist, an der in Solllage Bestandteile (6) des oder der Zusatzteile (5) anliegen.

4. Leuchte nach einem der Ansprüche 1 bis 3, **dadurch gekennzeichnet, dass** drei Federelemente (7) vorgesehen sind, die gleichmäßig voneinander beabstandet auf dem Kragen (2) des Vorsatzringes (1) positioniert sind.

5. Leuchte nach einem der Ansprüche 1 bis 4, **dadurch gekennzeichnet, dass** das Leuchtengehäuseteil (3) mit seinem zylindrischen Endteil (4) in Montagesolllage bündig an die Außenumfangskontur des Vorsatzringes (1) anschließt, so dass eine stufenlose Außenfläche gebildet ist.

6. Leuchte nach einem der Ansprüche 1 bis 5, **dadurch gekennzeichnet, dass** das Zusatzteil (5) ein Reflektor ist, der an seinem weiten Ende einen radial abragenden Flanschrand (6) bildet oder aufweist, der in Solllage an der Anschlagkante des Vorsatzringes (1) anliegt.

7. Leuchte nach einem Anspruch 6, **dadurch gekennzeichnet, dass** bevorzugt zusätzlich zum Reflektor oder alternativ eine Glasschutzscheibe, ein oder mehrere Filterglasscheiben oder ein Wabenraster als Zusatzteil (5) angeordnet ist.

8. Leuchte nach einem der Ansprüche 1 bis 7, **dadurch gekennzeichnet, dass** am Leuchtengehäuseteil (3) Fassungen für Leuchtmittel fixiert sind.

## Claims

1. An electric lamp comprising an attachment ring (1) having a collar (2) being axially projecting, circumferential, or formed from sections, a lamp housing portion (3) being positioned with a cylindrical end portion (4) on the collar (2) of the attachment ring (1), and at least one additional part (5) that is positioned with a part (6) an the collar (2) of the attachment ring (1), comprising at least one spring element (7), which is fitted on the collar (2) of the attachment ring (1) and is clamped thereat, the spring element (7) having first resilient and/or latching parts (8) projecting, in the intended mounting position, radially outwardly from the collar (2) and being in engagement with holding contours (9) at the inner shell of the cylindrical end portion (4) of the lamp housing portion (3), and the spring element (7) having second resilient and/or latching parts (10), projecting, in the intended mounting position, radially inwardly from the collar (2), **characterized in that** the second resilient and/or latching parts of the spring element are in engagement with parts or areas of at least one additional part (5), that the spring element (7) includes an approximately U-shaped part that can be fitted on the collar (2) of the attachment ring (1), a first leg (12) of the U-shaped part abutting against the radially exterior shell of the collar (2), and includes at least one resilient latching tab (13) supported on the shell of the collar (2) or preferably engaging in a locking manner in a cutout or recess of the shell, a second leg (14) of the U-shaped part being divided into a plurality of latching fingers (15, 16), the first latching fingers (15) of which abut against the inner shell surface of the collar (2) opposite to the resilient latching tabs (13), and a second latching finger (16) of which engages in a resilient manner in a cutout (21) of the collar (2), the second latching finger (16) forming the second resilient and/or latching parts (10) for holding an additional part (5), and that at the free border edge of the first leg (12) of the U-shaped part is formed a spring part extending in the peripheral direction of the collar (2), said spring part forming the first resilient and/or latching spring element (8), for which purpose the spring part forms or includes an introduction surface (17), a latching tab (18), and an end stop (19), and that at the inner shell of the cylindrical end portion of the housing portion (3) are formed axially directed web pairs (9) having cutouts (20) in the peripheral direction, into which the spring part can be fitted with the introduction surface (17) up to the end stop (19) at one of the webs (9), in the intended position the latching tab (18) being supported at the one web (9) and specifically on the side of the web facing away from the end stop (19), finally the parts of the web pairs (9) facing away from the end of the cylindrical end portion (4) of the lamp housing portion (3) and being interrupted by the cutout (20) being supported at the first leg (12) of the U-shaped part or at last being arranged in a small radial distance therefrom.

2. The lamp according to claim 1, **characterized in that** the attachment ring (1) includes a radially projecting flange (11) or a plurality of flange parts, against which, in the intended position, the free border edge of the cylindrical end portion (4) of the lamp housing portion (3) abuts.

3. The lamp according to claim 1 or 2, **characterized in that** the attachment ring (1) includes at the collar (2) an interior radially projecting stop edge disposed circumferentially or formed by partial pieces, at which, in the intended position, parts (6) of the additional part (5) or parts (5) abut.

4. The lamp according to one of claims 1 to 3, **characterized in that** three spring elements (7) are provided, which are positioned on the collar (2) of the attachment ring (1) in a uniformly spaced manner.

5. The lamp according to one of claims 1 to 4, **characterized in that** the lamp housing portion (3) with its cylindrical end portion (4), in the intended mounting position, is flush with the outer contour of the attachment ring (1), so that a step-free outer surface is formed.

6. The lamp according to one of claims 1 to 5, **characterized in that** the additional part (5) is a reflector forming or including at its wide end a radially projecting flange edge (6) that, in the intended position, abuts against the stop edge of the attachment ring (1).

7. The lamp according to claim 6, **characterized in that** preferably, additionally or alternatively to the reflector, a glass protection disc, one or a plurality of filter glass discs, or a honeycomb grid is disposed as an additional part (5).

8. The lamp according to one of claims 1 to 7, **characterized in that** at the lamp housing portion (3), sockets for lighting means are fixed.

## Revendications

1. Lampe électrique comprenant un anneau d'accrochage (1) ayant une collerette (2) saillant axialement, circonférentielle, ou formée en sections, une partie de boîtier (3) de la lampe étant positionnée avec une partie d'extrémité cylindrique (4) sur la collerette (2) de l'anneau d'accrochage (1), et au moins une pièce additionnelle (5) qui est positionnée avec une partie (6) à la collerette (2) de l'anneau d'accrochage (1), comprenant au moins un élément ressort (7), qui est enfiché sur la collerette (2) de l'anneau d'accrochage (1) et est serré à celle-ci, l'élément ressort (7) ayant des premières parties par encliquetage élastiques (8) saillant, dans la position de consigne de montage, radialement vers l'extérieur à partir de la collerette (2) et étant engagées dans des contours de maintien (9) à l'enveloppe intérieure de la partie d'extrémité cylindrique (4) de la partie de boîtier (3) de la lampe, et l'élément ressort (7) ayant des deuxièmes parties par encliquetage élastiques (10), saillant, dans la position de consigne de montage, radialement vers l'intérieur à partir de la collerette (2), **caractérisée en ce que** les deuxièmes parties par encliquetage élastiques de l'élément ressort sont engagées dans des parties ou sections d'au moins une pièce additionnelle (5), que l'élément ressort (7) comporte une partie environ en U qui peut être enfichée sur la collerette (2) de l'anneau d'accrochage (1), une première jambe (12) de la partie en U étant en appui sur l'enveloppe radialement extérieure de la collerette (2), et comporte au moins un bec d'encliquetage (13) élastique prenant appui sur l'enveloppe de la collerette (2) ou de préférence s'engageant de manière bloquée dans un évidement ou une cavité de l'enveloppe, une deuxième jambe (14) de la partie en U étant divisée en plusieurs doigts d'encliquetage (15, 16), des premiers doigts d'encliquetage (15) desquels sont en appui sur la surface intérieure de l'enveloppe de la collerette (2) opposée aux becs d'encliquetage élastiques (13), et un deuxième doigt d'encliquetage (16) desquels s'engage de manière élastique dans un évidement (21) de la collerette (2), le deuxième doigt d'encliquetage (16) formant les deuxièmes parties par encliquetage élastiques (10) pour maintenir une pièce additionnelle (5), et qu'à l'arête de bord libre de la première jambe (12) de la partie en U est formée une partie de ressort s'étendant dans la direction périphérique de la collerette (2), ladite partie de ressort formant le premier élément ressort par encliquetage élastique (8), pour ce but la partie de ressort formant ou comportant une surface d'insertion (17), un bec d'encliquetage (18) et une butée d'extrémité (19), et qu'à l'enveloppe intérieure de la partie d'extrémité cylindrique de la partie de boîtier (3), des paires d'entretoises (9) dirigées axialement et ayant des évidements (20) dans la direction périphérique sont formées, dans lesquels la partie de ressort peut être enfichée avec la surface d'insertion (17) jusqu'à la butée d'extrémité (19) à une des entretoises (9), dans la position de consigne le bec d'encliquetage (18) prenant appui sur l'une entretoise (9) et spécifiquement sur le côté de l'entretoise étant opposé à la butée d'extrémité (19), enfin les parties des paires d'entretoises (9) étant opposées à l'extrémité de la partie d'extrémité cylindrique (4) de la partie de boîtier (3) de la lampe et étant interrompues par l'évidement (20) prenant appui sur la première jambe (12) de la partie en U ou au moins étant arrangées à une faible distance radiale de celle-ci.

2. Lampe selon la revendication 1, **caractérisée en ce que** l'anneau d'accrochage (1) comporte une bride (11) saillant radialement ou plusieurs parties de bride, sur laquelle ou lesquelles, dans la position de consigne, l'arête de bord libre de la partie d'extrémité cylindrique (4) de la partie de boîtier (3) de la lampe est en appui.

3. Lampe selon la revendication 1 ou 2, **caractérisée en ce que** l'anneau d'accrochage (1) comporte à la collerette (2) une arête de butée intérieure saillant radialement et disposée circonférentiellement ou formée en des pièces partielles, sur laquelle, dans la position de consigne, des parties (6) de la pièce additionnelle (5) ou des parties additionnelles (5) sont en appui.

4. Lampe selon une des revendications 1 à 3, **caractérisée en ce que** trois éléments ressorts (7) sont prévus, qui sont positionnés sur la collerette (2) de l'anneau d'accrochage (1) à des distances régulières.

5. Lampe selon une des revendications 1 à 4, **caractérisée en ce que** la partie de boîtier (3) de la lampe est en alignement par sa partie d'extrémité cylindrique (4), dans la position de consigne de montage, avec le contour extérieur de l'anneau d'accrochage (1), de façon qu'une surface extérieure sans marches soit formée.

6. Lampe selon une des revendications 1 à 5, **caractérisée en ce que** la pièce additionnelle (5) est un réflecteur formant ou comportant à son extrémité large une arête de bride (6) saillant radialement qui, dans la position de consigne, est en appui sur l'arête de butée de l'anneau d'accrochage (1).

7. Lampe selon la revendication 6, **caractérisée en ce que** de préférence, additionnellement ou alternativement au réflecteur, un disque de protection en verre, un ou plusieurs disques de filtration en verre, ou un corps alvéolé est disposé comme pièce additionnelle (5).

8. Lampe selon une des revendications 1 à 7, **caractérisée en ce que** des douilles pour des moyens luminaires sont fixées à la partie de boîtier (3) de la lampe.
